(19) **Europäisches Patentamt / European Patent Office / Office européen des brevets**

(11) **EP 2 382 286 B1**

(12) **FASCICULE DE BREVET EUROPEEN**

(45) Date de publication et mention de la délivrance du brevet:
**23.03.2016 Bulletin 2016/12**

(21) Numéro de dépôt: **09834222.3**

(22) Date de dépôt: **23.12.2009**

(51) Int Cl.:
*C10L 1/14* (2006.01)  *C10L 1/16* (2006.01)
*C10L 1/19* (2006.01)  *C10L 10/12* (2006.01)
*C10L 10/08* (2006.01)  *C10L 1/02* (2006.01)

(86) Numéro de dépôt international:
**PCT/IB2009/055945**

(87) Numéro de publication internationale:
**WO 2010/073233 (01.07.2010 Gazette 2010/26)**

(54) **CARBURANT DE TYPE GAZOLE POUR MOTEUR DIESEL A FORTES TENEURS EN CARBONE D'ORIGINE RENOUVELABLE ET EN OXYGENE**

DIESELKRAFTSTOFF FÜR EINEN DIESELMOTOR MIT HOHEN GEHALTEN AN KOHLENSTOFF AUS ERNEUERBAREN QUELLEN UND SAUERSTOFF

DIESEL FUEL FOR A DIESEL ENGINE WITH HIGH CARBON FROM RENEWABLE SOURCES AND OXYGEN CONTENTS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807399**

(43) Date de publication de la demande:
**02.11.2011 Bulletin 2011/44**

(73) Titulaire: **Total Raffinage France**
**92400 Courbevoie (FR)**

(72) Inventeurs:
• **BORG, Françoise**
  **F-92200 Neuilly Sur Seine (FR)**
• **ESPERT, Alexandre**
  **F-14600 Honfleur (FR)**
• **VINCENT, Aurélie**
  **F-76600 Le Havre (FR)**

(74) Mandataire: **Hirsch & Associés**
**137, rue de l'Université**
**75007 Paris (FR)**

(56) Documents cités:
WO-A-03/004588      WO-A-2004/022674
WO-A-2007/068798    US-A1- 2005 160 663
US-A1- 2006 288 637  US-A1- 2008 209 798

**EP 2 382 286 B1**

**Description**

La présente invention concerne une nouvelle composition de carburant de type gazole à fortes teneurs en carbone d'origine non fossile et en oxygène susceptible notamment de répondre aux spécifications de la norme EN 590 actuellement en vigueur à la date de dépôt de la présente demande de brevet en termes de propriétés de combustion.

Au sens de la présente invention, par matériau d'origine renouvelable, on entend les matériaux qui comprennent du carbone d'origine renouvelable.

En effet, à la différence des matériaux issus de matières fossiles (pétrole, charbon, houille, gaz naturel ...), les matériaux composés de matières premières renouvelables contiennent du $^{14}C$. Tous les échantillons de carbone tirés d'organismes vivants (animaux ou végétaux) sont en fait un mélange de 3 isotopes : $^{12}C$ (représentant ~ 98,892 %), $^{13}C$ (~ 1,108 %) et $^{14}C$ (traces: $1,2.10^{-12}$ %). Le rapport $^{14}C/^{12}C$ des tissus vivants est identique à celui de l'atmosphère. Dans l'environnement, le $^{14}C$ existe sous deux formes prépondérantes : sous forme minérale c'est-à-dire sous forme de gaz carbonique ($CO_2$) et sous forme organique c'est-à-dire de carbone intégré dans des molécules organiques.

Dans un organisme vivant, le rapport $^{14}C/^{12}C$ est maintenu constant par le métabolisme car le carbone est continuellement échangé avec l'environnement. La proportion de $^{14}C$ étant sensiblement constante dans l'atmosphère, il en est de même dans l'organisme, tant qu'il est vivant, puisqu'il absorbe ce $^{14}C$ comme il absorbe le $^{12}C$. Le rapport moyen de $^{14}C/^{12}C$ est égal à $1,2\times10^{-12}$.

Le $^{12}C$ est stable, c'est-à-dire que le nombre d'atomes de $^{12}C$ dans un échantillon donné est constant au cours du temps. Le $^{14}C$, lui, est radioactif (chaque gramme de carbone d'être vivant contient suffisamment d'isotope $^{14}C$ pour donner 13,6 désintégrations par minute) et le nombre de tels atomes dans un échantillon décroît au cours du temps (t) selon la loi :

$$n = no \exp(-at)$$

dans laquelle:

- no est le nombre de $^{14}C$ à l'origine (à la mort de la créature, animal ou plante),
- n est le nombre d'atomes $^{14}C$ restant au bout du temps t,
- a est la constante de désintégration (ou constante radioactive), reliée à la demi-vie.

La demi-vie (ou période) est la durée au bout de laquelle un nombre quelconque de noyaux radioactifs ou de particules instables d'une espèce donnée, est réduit de moitié par désintégration ; la demi-vie $T_{1/2}$ est reliée à la constante de désintégration a par la formule $aT_{1/2} = \ln 2$. La demi-vie du $^{14}C$ vaut 5730 ans.

Compte tenu de la demi-vie ($T_{1/2}$) du $^{14}C$, on considère que la teneur en $^{14}C$ est sensiblement constante depuis l'extraction des matières premières végétales jusqu'à la fabrication du matériau, et même jusqu'à la fin de son utilisation.

A l'heure actuelle, il existe au moins deux techniques différentes pour la mesure de la teneur en $^{14}C$ d'un échantillon :

1/ Par spectrométrie à scintillation liquide : Cette méthode consiste à compter des particules 'Bêta' issues de la désintégration du $^{14}C$. On mesure le rayonnement Bêta issu d'un échantillon de masse connue (nombre d'atomes $^{12}C$ connu) pendant un certain temps. Cette 'radioactivité' est proportionnelle au nombre d'atomes de $^{14}C$, que l'on peut ainsi déterminer. Le $^{14}C$ présent dans l'échantillon émet des rayonnements ß-, qui au contact d'un liquide scintillant (scintillateur) donnent naissance à des photons. Ces photons ont des énergies différentes (comprises entre 0 et 156 keV) et forment ce que l'on appelle un spectre de $^{14}C$. Selon deux variantes de cette méthode, l'analyse porte soit sur le $CO_2$ préalablement produit par l'échantillon carboné dans une solution absorbante appropriée, soit sur le benzène après conversion préalable de l'échantillon carboné en benzène (méthodes A et C, respectivement, de la norme ASTM D 6866 (ASTM D 6866-06).

2/ Par spectrométrie de masse : L'échantillon est réduit en graphite ou en $CO_2$ gazeux, analysé dans un spectromètre de masse. Cette technique utilise un accélérateur et un spectromètre de masse pour séparer les ions $^{14}C$ des $^{12}C$ et donc déterminer le rapport des deux isotopes.

Toutes ces méthodes de mesure de la teneur en $^{14}C$ des matériaux sont décrites précisément dans les normes ASTM D 6866 (notamment D6866-06) et dans les normes ASTMD 7026 (notamment 7026-04).

La norme ASTM D 6866 a pour objet *"Determining the Biobased Content of Natural Range Materials Using Radiocarbon and Isotope Ratio Mass Spectrometry Analysis"*, tandis que la norme ASTM D 7026 a pour objet *"Sampling and Reporting of Results for Determination of Biobased Content of Materials via Carbon Isotope Analysis"*. La seconde norme renvoie dans son premier paragraphe à la première.

La norme ASTM D 6866 (ASTM D 6866-06) décrit un test de mesure du ratio $^{14}C/^{12}C$ d'un échantillon et le compare avec le ratio $^{14}C/^{12}C$ d'un échantillon référence d'origine 100% renouvelable, pour donner un pourcentage relatif de C d'origine renouvelable dans l'échantillon. La norme est basée sur les mêmes concepts que la datation au $^{14}C$, mais sans faire application des équations de datation.

Le ratio ainsi calculé est désigné comme le "pMC" (percent Modern Carbon). Si le matériau à analyser est un mélange de biomatériau et de matériau fossile (sans isotope radioactif), alors la valeur de pMC obtenus est directement corrélée à la quantité de biomatériau présent dans l'échantillon. La valeur de référence utilisée pour la datation au $^{14}C$ est une valeur datant des années 1950. Cette année a été choisie en raison de l'existence d'essais nucléaires dans l'atmosphère qui ont introduit des grandes quantités d'isotopes dans l'atmosphère après cette date. La référence 1950 correspond à une valeur pMC de 100. Compte tenu des essais thermonucléaires, la valeur actuelle à retenir est d'environ 107.5 (ce qui correspond à un facteur de correction de 0.93). La signature en carbone radioactif d'un végétal actuel est donc de 107.5. Une signature de 54 pMC et de 99 pMC correspond donc à une quantité de biomatériau dans l'échantillon de 50% et de 93%, respectivement.

La méthode de mesure préférentiellement utilisée dans le cas des carburants est la méthode par spectrométrie à scintillation liquide car c'est une méthode qui nécessite un appareillage de laboratoire plus usuel que la spectrométrie de masse par accélérateur dont les équipements sont peu nombreux à travers le monde.

Au sens de la présente invention, un matériau, une composition de carburant a une forte teneur en matières renouvelables carbonées lorsqu'il contient au moins 10% en masse de C d'origine renouvelable sur la masse totale de carbone, de préférence au moins 20 % en masse de C d'origine renouvelable sur la masse totale de carbone.

Au sens de la présente invention, un matériau, une composition de carburant a une forte teneur en matières premières oxygénées lorsque le pourcentage massique d'oxygène par rapport à la masse totale de matériau, de carburant représente au moins 0,5 %, de préférence au moins 0,6 % et avantageusement au moins 2 %.

Art Antérieur

Les carburants diesel (carburants pour moteurs à allumage par compression) utilisés dans le monde ont longtemps été exclusivement d'origine 100 % minérale ou fossile, c'est-à-dire exclusivement à base d'hydrocarbures, le plus souvent d'origine pétrolière pour des raisons économiques, mais aussi à base d'hydrocarbures liquides dérivés du charbon selon les procédés de type Fischer-Tropsch ; ces carburants d'origine 100 % minérale ou fossile présentent d'excellentes propriétés de combustion et répondent sans difficulté aux spécifications commerciales, par exemple celles définies dans la norme NF EN 590 : 2004 pour les propriétés chimiques (teneur en soufre, en eau, en cendres, en hydrocarbures aromatiques polycycliques), physiques (viscosité, PT, TLF, PE, ....), énergétiques (PCI, IC, ).

La prise en compte des contraintes environnementales (diminution des gaz à effet de serre, ....) d'une part, la disponibilité moins grande et l'augmentation du prix des produits pétroliers d'autre part, ont amené les fabricants de carburants à proposer des solutions alternatives à ces carburants d'origine 100 % minérale ou fossile :

Ainsi, depuis le 1er janvier 2008, les carburants pour moteurs diesel commercialisés dans les stations-service françaises peuvent contenir jusqu'à 7 % en volume d'esters méthyliques d'acides gras (EMAG), la teneur maximale en EMAG était de 5 % en volume jusqu'à fin 2007.

Ces EMAG proviennent essentiellement de la trans-estérification d'huiles végétales telles que huiles de colza, tournesol, soja, palme, palmiste. Ces carburants respectent les spécifications de la norme NF EN 590 mais la concentration en matériau renouvelable, inférieure à 7 % en en volume, est faible.

Une solution consiste à augmenter de manière très significative la quantité d'EMAG dans le carburant diesel, typiquement de l'ordre d'au moins 50 % en masse, voire même jusqu'à 100 % ; non seulement les propriétés de combustion de ces mélanges (PCI notamment) ne sont pas complètement satisfaisantes mais les émissions de polluants sont supérieures à celles des carburants diesel classiques (NOx, aldéhydes, ...) ; de plus la stabilité à l'oxydation de ces carburants alternatifs n'est parfois pas satisfaisante.

Une autre solution consiste à utiliser telles quelles les huiles végétales comme carburants diesel mais leur viscosité très élevée (10 fois la viscosité du gazole à 50 °C pour l'huile de colza), leur PCI faible et les risques d'encrassement des injecteurs et de la chambre de combustion très importants les réservent à des usages particuliers et limités à des moteurs rustiques et peu exigeants qui ne correspondent pas aux exigences des véhicules automobiles actuels très sophistiqués.

Il a également été proposé d'ajouter à des carburants diesel classiques d'origine fossile jusqu'à 25 % en masse de composants issus de matières biologiques (plantes et/ou animaux et/ou poissons) obtenus par hydroconversion de corps gras d'origine animale et/ou végétale (cf US 5.705.722 , WO 2004/022674, EP 1.693.432, US 2007/0175795, WO 2008/012415) ; ces composants sont essentiellement constitués de N-paraffines en C15-C18 et améliorent le cétane de manière très significative ; mais lorsqu'ils sont introduits en quantité supérieure à 10 % en volume, on constate que le point d'écoulement et le point de trouble des mélanges augmentent et dépassent largement les limites imposées par la norme NF EN 590, ce qui n'est pas satisfaisant.

WO 2007/068798 propose une charge provenant de sources renouvelables convertie en hydrocarbures ramifiés et saturés sans hétéroatomes par isomérisation squelettique et désoxygénation réalisée par hydrodésoxygénation ou encore par réactions combinées de décarboxylation et de décarbonylation.

La présente invention concerne une composition de carburant de type gazole pour moteur diesel ou moteur à compression comprenant de

de 5 à 15 %, de préférence de 10 à 15 %, en masse d'au moins une base contenant de 70 à 100% en masse de N-paraffines en C15-C18, de préférence d'origine renouvelable,

de 5 à 30 %, de préférence de 15 à 25 %, en masse d'esters d'acide(s) gras, de préférence dérivés huile(s) végétales et/ou de graisse(s) animale(s) et/ou de biomasse,

une ou plusieurs bases carburant de type gazole conventionnelles d'origine fossile et/ou renouvelable, représentant de préférence pas plus de 70 % de la masse totale de ladite composition, de préférence de 60 à 70%

et caractérisée en ce que

- le carbone d'origine renouvelable représente au moins 10 % de la masse totale de carbone, et de préférence de 10 à 40 % de la masse totale de carbone,
et

- l'oxygène représente au moins 0,5 % de la masse totale de la composition de carburant, de préférence au moins 0,6 %, avantageusement au moins 2 % de la masse totale d'oxygène ; l'oxygène représente jusqu'à 5 % et de préférence jusqu'à 4 % de la masse totale de la composition de carburant, la quantité en iso-paraffines ne dépassant pas plus de 15% en masse de la masse totale de la composition de carburant.

Les bases N-paraffines en C15-C18 contiennent de 70 à 100 % en masse de N-paraffines en C15-C18, avantageusement de 80 à 100%.

Les bases constituées essentiellement de N-paraffines en C15-C18 sont de préférence d'origine renouvelable ; elles proviennent par exemple de procédés d'hydroconversion de corps gras et/ou d'huiles végétales et/ou d'huiles de poisson et/ou de leurs esters, qui contiennent des acides gras ; les bases constituées essentiellement de N-paraffines peuvent par exemple être obtenues selon les procédés décrits dans US 4.992.605, US 5.705.722, US 6.270.655.

Les esters d'acide(s) gras sont d'origine renouvelable et sont avantageusement choisis parmi les esters méthyliques, les esters éthyliques, leurs mélanges ; on peut par exemple citer l'ester méthylique (EMC) et l'ester éthylique de colza (EEC), l'ester méthylique (EMP) et l'ester éthylique de palme (EEP) , l'ester méthylique (EMS) et l'ester éthylique de soja (EES), l'ester méthylique (EMT) et l'ester éthylique de tournesol (EET), seuls ou en mélange.

Les esters d'acide(s) gras sont en général obtenus à partir d'huiles végétales, de corps gras d'origine animale, d'huiles de poisson et/ou de dérivés d'origine végétale, par exemple d'arbres résineux, tels que le tall oil.

Les bases conventionnelles d'origine fossile utilisées classiquement pour la formulation des carburants de type gazole sont des bases issues de raffineries pétrolières ; ces bases de raffinerie sont en général choisies parmi les bruts paraffiniques, naphténiques, issus de procédés de distillation atmosphérique, les distillats sous vide issus de procédés FCC et/ou d'hydrocraquage, les résidus sous vide issus de procédés de viscoréduction et de cokéfaction et/ou les résidus atmosphériques désasphaltés issus de procédés d'hydrocraquage.

Les bases utilisées pour la formulation des carburants de type gazole peuvent également être issues de procédés Fischer-Tropsch (procédés de conversion catalytique du monoxyde de carbone et d'hydrogène en hydrocarbures de chaîne longue, en général des paraffines). Lorsque le monooxyde de carbone provient du charbon, de la houille, du gaz naturel, les bases Fischer-Tropsch obtenues sont d'origine fossile (non renouvelable).

On ne sortirait pas du cadre de l'invention dans le cas où les bases Fischer-Tropsch seraient d'origine renouvelable ou partiellement renouvelable, c'est-à-dire dans le cas où elles seraient issues de monoxyde de carbone provenant totalement ou partiellement de ressources végétales, animales ou biomasse.

On ne sortirait pas du cadre de l'invention si, outre des N-paraffines, des esters d'acides gras et des bases de type gazole, les compositions selon l'invention contenaient également des iso-paraffines, les iso-paraffines étant en général ajoutées en une quantité ne dépassant plus de 15 % en masse de la masse totale de la composition de carburant selon l'invention telle que définie précédemment, et de préférence représentant de 5 à 15 % de la masse totale de la composition.

Les iso-paraffines peuvent par exemple être obtenues par isomérisation selon des procédés connus à partir de bases constituées essentiellement de N-paraffines telles que décrites précédemment, par exemple par hydrodéoxygénation et hydroisomérisation de triglycérides ou par isomérisation suivie d'une déoxygénation d'acides gras comme décrit dans WO 2007/068798.

Les bases entrant dans les compositions de carburant de type gazole sont sélectionnées en fonction de leurs propriétés, et plus particulièrement en fonction de

- leur comportement à basse température,
- leur indice de cétane,
- leur teneur en soufre,
- leur masse volumique.

En général, les compositions de carburant de type gazole sont obtenues par mélange de plusieurs bases de raffinerie. Les bases conventionnelles de raffinerie qui entrant dans les compositions de carburant diesel ont

* des points d'ébullition généralement compris entre 150 et 450 °C,
* une température de cristallisation commençante Tcc supérieure ou égale à -15°C,
* une masse volumique comprise entre 0,75 et 0,9 g/cm³,
* un indice de cétane compris en général entre 35 et 80, plus souvent entre 40 et 75,
* une teneur en soufre, imposée par les législations, en général inférieure à 500 mg/kg massique; à titre d'exemple, la teneur en soufre actuelle des carburants gazole commercialisés dans l'Union Européenne est inférieure à 50 mg/kg et devra être inférieure à 10 mg/kg à compter du 01/01/09 (EN 590) ; la teneur en soufre actuelle du fioul domestique commercialisé dans l'Union Européenne est inférieure à 0,2 % massique (CSR 442)

Les compositions de carburant de type gazole préférées selon l'invention peuvent être préparées par mélange de base(s) conventionnelles de raffinerie classiques (en général d'origine fossile), de bases de type Fischer-Tropsch, d'au moins une base essentiellement constituée de N-paraffines, d'au moins une composition essentiellement constituée d'esters d'acide(s) gras.

Elles peuvent également être préparées par mélange d'une composition comprenant les esters d'acide(s) gras et du produit issu de l'hydrotraitement conjoint (co-processing) d'huiles végétales et/ou de corps gras et d'au moins une base gazole ; de tels procédés sont par exemple décrits dans US 6.270.655, WO 2004/022 674, EP 1.693.432, US 2007/0175795, WO 2008/012415, WO2008/088279, WO2008/119895. Lorsque l'on souhaite des compositions contenant en outre des iso-paraffines, il est possible de prévoir une étape d'isomérisation partielle (des N-paraffines) après l'hydrotraitement conjoint.

Les méthodes de mélange, les procédés décrits précédemment peuvent être également combinés.

Pour pouvoir être utilisée comme carburant de type gazole, la composition selon l'invention comprend avantageusement un ou plusieurs additifs parmi lesquels on peut citer les détergents, les agents anti-corrosion, les dispersants, les désémulsifiants, des agents anti-mousse, des biocides, des réodorants, des additifs procétane, les modificateurs de friction, des agents d'aide à la combustion (promoteurs catalytiques de combustion et de suie), les agents améliorant le point de trouble, des agents anti-sédimentation, les agents anti-usure et/ou les agents modifiant la conductivité, voire même un ou plusieurs autres additifs améliorant le point d'écoulement, la température limite de filtrabilité, et le pouvoir lubrifiant.

Parmi ces additifs, on peut citer particulièrement :

a) les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de ter-butyle ;

b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP 861.182 , EP 663.000 , EP 736.590 ;

c) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines. Des exemples de tels additifs sont donnés dans EP 938 535 ;

d) additif de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP 680.506, EP 860.494, WO 98/04656, EP 915.944, FR2.772.783, FR 2.772.784 ;

e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71.513, EP 100.248, FR2.528.051, FR2.528.051, FR 2.528.423, EP1.112.195, EP 172.758, EP 271.385, EP 291 367 ;

f) les additifs d'anti-sédimentation ou dispersants, notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalique et d'amine grasse à double chaîne; les résines alkyl phénols. Des exemples de tels additifs sont donnés dans EP 261.959, EP 593.331, EP 674.689, EP 327.423, EP 512.889, EP 832.172, US2005/0223631, US 5.998.530, WO 93/14178 ;

g) les additifs polyfonctionnels d'opérabilité à froid choisis dans le groupe constitué par les polymères à base d'oléfine et de nitrate d'alkényle tels que décrits dans EP 573.490 ;

h) les additifs de tenue à froid tels que les copolymères d'alpha oléfine et d'ester(s) vinylique(s) tel que EVA, EVP les copolymères d'éthylène, d'acétate de vinyle et d'ester de vinyle ramifié tels que les néodécanoate de vinyle (VEOVA) décrits notamment dans US 2004/0226216.

Ces additifs sont en général ajoutés en quantité allant de 10 à 1.000 ppm (chacun).

L'homme du métier de la formulation des carburants a à choisir parmi les bases et les additifs, ceux qui conviennent pour atteindre les spécifications requises du carburant final.

Certaines des compositions de l'invention, outre leur utilisation comme carburants pour moteur à compression ou moteur diesel de véhicules peuvent être avantageusement utilisées comme combustibles liquides dans des applications fixes de production d'énergie, notamment dans le bâtiment, pour le chauffage (fioul domestique,), pour la cuisson. Les spécifications pour le fioul domestique sont réunies dans CSR 442 et sont différentes de celles des carburants de type gazole selon EN 590, notamment pour ce qui concerne le taux de soufre, l'indice de cétane.

EXEMPLES

Dans les exemples ci-dessous, les caractéristiques physico-chimiques des composants et des mélanges sont mesurées selon les normes indiquées ci-dessous :

| | |
|---|---|
| Masse volumique à 15 °C (mv) (kg/m$^3$) | NF EN ISO 12185 |
| Point de trouble (PT) (°C) | NF EN 23015 |
| Indice de cétane (IC) | ASTM D4737 |
| Pouvoir lubrifiant (HFRR) ($\mu$m) | NF EN ISO 12156 |

On prépare des compositions de carburant à partir des composants suivants :

- une base pétrolière de type gazole sans additif (mv : 813,6 kg/m$^3$ ; IC : 43,5 ; PT : -18,8 °C et pouvoir lubrifiant HFRR : 697 $\mu$m) ; cette base ne contient pas de C renouvelable ;
- de l'ester méthylique de colza (EMC) (comprenant 77,6 % en masse de carbone, 11,1 % en masse d'oxygène, le reste étant de l'hydrogène); tout le C est d'origine renouvelable ;
- une coupe essentiellement constituée de N-paraffines en C15-C18 obtenue par un procédé d'hydrotraitement d'huile de palme (comprenant 85,1 % en masse de carbone, le reste étant de l'hydrogène) tout le C est d'origine renouvelable.

Les compositions de carburant sont préparées par mélange à température ambiante des composants ci-dessus ; on mesure les propriétés physico-chimiques masse volumique (mv) / point de trouble (PT) /indice de cétane (IC) /diamètre d'usure HFRR des mélanges qui sont réunies dans le tableau 1 ci-dessous :

Tableau 1

| Base GO % masse | EMC % masse | C15-C18 N-paraffines % masse | Propriétés physico-chimiques | Cr (% massique de C renouvelable /C total) O (% massique de O sur masse totale de la composition) |
|---|---|---|---|---|
| 65 | 30 | 5 | mv : 832 kg/m$^3$ PT:-13°C IC : 46,9 HFRR : 206 $\mu$m | Cr : 33 % O : 3,3 % |
| 70 | 30 | 0 | mv : 834 kg/m$^3$ PT : -13,4°C IC : 44,4 HFRR : 244 $\mu$m | Cr : 27,9 % O : 3,3 % |

(suite)

| Base GO<br>% masse | EMC<br>% masse | C15-C18 N-paraffines<br>% masse | Propriétés physico-chimiques | Cr (% massique de C renouvelable /C total)<br>O (% massique de O sur masse totale de la composition) |
|---|---|---|---|---|
| 70 | 20 | 10 | mv : 824 kg/m$^3$<br>PT : -13,2°C<br>IC : 47,8<br>HFRR : 198 $\mu$m | Cr : 28,5 %<br>O : 2,2 % |
| 60 | 30 | 10 | mv : 831 kg/m$^3$<br>PT : -11,6°C<br>IC : 50,5<br>HFRR :192 mm | Cr : 38 %<br>O : 3,3 % |
| 60 | 20 | 20 | mv : 821 kg/m$^3$<br>PT : -6,9°C<br>IC : 54<br>HFRR : 201 $\mu$m | Cr: 38 %<br>O : 2,2 % |
| 70 | 0 | 30 | mv : 804 kg/m$^3$<br>PT : -5°C<br>IC : 55,6<br>HFRR : 419 $\mu$m | Cr: 30 %<br>O: 0% |
| 65 | 5 | 30 | mv : 807 kg/m$^3$<br>PT : -4,4°C<br>IC : 56,8<br>HFRR : 224 $\mu$m | Cr: 34 %<br>O : 0,6 % |

**Revendications**

1. Composition de carburant comprenant
de 5 à 15 % en masse d'au moins une base contenant de 70 à 100% en masse de N-paraffines en C15-C18,
de 5 à 30 % en masse d'esters d'acide(s) gras,
une ou plusieurs bases carburant de type gazole conventionnelles **caractérisée en ce que**

   • le carbone d'origine renouvelable représente au moins 10 % de la masse totale de carbone, et
   • l'oxygène représente au moins 0,5 % et jusqu'à 5 % de la masse totale de la composition de carburant,

   la quantité en iso-paraffines ne dépassant pas plus de 15% en masse de la masse totale de la composition de carburant.

2. Composition selon la revendication 1, comprenant de 10 à 15% en masse de la base contenant de 70 à 100% en masse N-paraffines en C15-C18.

3. Composition selon la revendication 1 ou 2, dans laquelle la base contenant de 70 à 100% en masse de N-paraffines en C15-C18 est d'origine renouvelable.

4. Composition selon l'une des revendications 1 à 3, comprenant de 15 à 25% en masse d'esters d'acide(s) gras.

5. Composition selon l'une des revendications 1 à 4, dans laquelle les esters d'acide(s) gras sont dérivés d'huile(s) végétales et/ou de graisse(s) animale(s) et/ou de biomasse.

6. Composition selon l'une des revendications 1 à 5, dans laquelle la ou les bases carburant de type gazole conventionnelles ne représentent pas plus de 70% de la masse totale de ladite composition, de préférence ladite ou lesdites bases représentent de 60 à 70% de la masse totale de ladite composition.

7. Composition selon l'une des revendications 1 à 6, dans laquelle le carbone d'origine renouvelable représente de 10 à 30% de la masse totale de carbone.

8. Composition selon l'une des revendications 1 à 7, dans laquelle l'oxygène représente au moins 2%, avantageusement au moins 3% de la masse totale de la composition de carburant et l'oxygène représente jusqu'à 5%, de préférence jusqu'à 4% de la masse totale de la composition de carburant.

9. Composition selon l'une des revendications 1 à 8, **caractérisée en ce qu'**elle comprend en outre au moins des iso-paraffines, en une quantité ne dépassant plus de 15 % en masse de la masse totale de la composition de carburant telle que définie dans l'une des revendications 1 à 8, et avantageusement représentant de 5 à 15 % de la masse totale de la composition telle que définie dans l'une des revendications 1 à 8.

10. Composition selon l'une quelconque des revendications 1 à 9, **caractérisée en ce qu'**elle comprend un ou plusieurs additifs parmi lesquels on peut citer les détergents, les agents anti-corrosion, les dispersants, les désémulsifiants, des agents anti-mousse, des biocides, des réodorants, des additifs procétane, les modificateurs de friction, des agents d'aide à la combustion (promoteurs catalytiques de combustion et de suie), les agents améliorant le point de trouble, des agents anti-sédimentation, les agents anti-usure et/ou les agents modifiant la conductivité, voire même un ou plusieurs autres additifs améliorant le point d'écoulement, la température limite de filtrabilité, et le pouvoir lubrifiant, chaque additif étant de préférence ajouté en quantité allant de 10 à 1.000 ppm.

11. Composition de carburant de type gazole pour moteur diesel ou moteur à compression selon l'une quelconque des revendication 1 à 10.

12. Procédé de préparation d'une composition de carburant selon l'une des revendications 1 à 11, **caractérisé en ce que**

a/ on mélange au moins une base conventionnelle de raffinerie d'origine fossile de type gazole et/ou au moins une base de type Fischer-Tropsch, au moins une base essentiellement constituée de N-paraffines, au moins une composition comprenant des esters d'acide(s) gras,
et/ou
b/ on mélange une composition comprenant des esters d'acide(s) gras et le produit issu de l'hydrotraitement conjoint (co-processing) d'huiles végétales et/ou de corps gras et d'au moins une base conventionnelle de raffinerie d'origine fossile de type gazole, suivie d'une éventuelle étape d'isomérisation,

étant entendu qu'il est possible d'associer plusieurs des étapes de a/ et de b/.

13. Utilisation d'une composition telle que définie dans l'une quelconque des revendications 1 à 11 comme carburant pour véhicules équipé d'un moteur à compression.

14. Utilisation d'une composition telle que définie dans l'une quelconque des revendications 1 à 11 pour la production d'énergie dans des applications fixes, tel que fioul domestique.

**Patentansprüche**

1. Kraftstoffzusammensetzung umfassend:

- 5 bis 15 Gew.-% mindestens eines Grundstoffs, enthaltend 70 bis 100 Gew.-% $C_{15}$-$C_{18}$-N-Paraffine,
- 5 bis 30 Gew.-% Fettsäureester,
- eine oder mehrere herkömmliche Dieselkraftstoffgrundstoffe, **dadurch gekennzeichnet, dass**

• der Kohlenstoff aus erneuerbaren Quellen mindestens 10 % des Gesamtgewichts des Kohlenstoffs ausmacht, und
• der Sauerstoff mindestens 0,5 % und bis zu 5 % des Gesamtgewichts der Kraftstoffzusammensetzung ausmacht,

wobei die Menge an Isoparaffinen nicht höher ist als 15 Gew.-% des Gesamtgewichts der Kraftstoffzusammensetzung.

2. Zusammensetzung nach Anspruch 1, umfassend 10 bis 15 Gew.-% des Grundstoffs, enthaltend 70 bis 100 Gew.-% $C_{15}$-$C_{18}$-N-Paraffine.

3. Zusammensetzung nach Anspruch 1 oder 2, wobei der Grundstoff, der 70 bis 100 Gew.-% $C_{18}$-$C_{18}$-N-Paraffine enthält, aus erneuerbaren Quellen stammt.

4. Zusammensetzung nach einem der Ansprüche 1 bis 3, umfassend 15 bis 25 Gew.-% Fettsäureester.

5. Zusammensetzung nach einem der Ansprüche 1 bis 4, wobei die Fettsäureester von Pflanzenöl(en) und/oder tierischem Fett bzw. tierischen Fetten und/oder Biomasse abgeleitet sind.

6. Zusammensetzung nach einem der Ansprüche 1 bis 5, wobei der oder die herkömmlichen Dieselkraftstoffgrundstoffe nicht mehr als 70 % des Gesamtgewichts der Zusammensetzung ausmachen, wobei der Grundstoff bzw. die Grundstoffe bevorzugt 60 bis 70 % des Gesamtgewichts der Zusammensetzung ausmachen.

7. Zusammensetzung nach einem der Ansprüche 1 bis 6, wobei der Kohlenstoff aus erneuerbaren Quellen 10 bis 30 % des Gesamtgewichts des Kohlenstoffs ausmacht.

8. Zusammensetzung nach einem der Ansprüche 1 bis 7, wobei der Sauerstoff mindestens 2 %, vorteilhafterweise mindestens 4 % des Gesamtgewichts der Kraftstoffzusammensetzung ausmacht und der Sauerstoff bis zu 5 %, bevorzugt bis zu 4 % des Gesamtgewichts der Kraftstoffzusammensetzung ausmacht.

9. Zusammensetzung nach einem der Ansprüche 1 bis 8, **dadurch gekennzeichnet, dass** sie ferner mindestens Isoparaffine in einer Menge umfasst, die nicht höher ist als 15 Gew.-% des Gesamtgewichts der Kraftstoffzusammensetzung, wie in einem der Ansprüche 1 bis 8 definiert, und vorteilhafterweise 5 bis 15 % des Gesamtgewichts der Kraftstoffzusammensetzung, wie in einem der Ansprüche 1 bis 8 definiert, ausmacht.

10. Zusammensetzung nach einem der Ansprüche 1 bis 9, **dadurch gekennzeichnet, dass** sie einen oder mehrere Additive umfasst, von denen Detergenzien, Antikorrosionsmittel, Dispersionsmittel, Demulgatoren, Antischaumsmittel, Biozide, Reodoranzien, die Cetanzahl erhöhende Additive, Reibungsmodifizierer, Verbrennungsunterstützungsmittel (Verbrennungs- und Russ-Katalyse-Promoter), Mittel, die den Cloudpoint verbessern, Antiabsetzmittel, Antiverschleißmittel und/oder Mittel, die die Leitfähigkeit modifizieren, oder sogar ein oder mehrere andere Additive, die den Stockpunkt, die Filtrierbarkeitsgrenze und die Schmierfähigkeit verbessern, genannt werden können, wobei jedes Additiv bevorzugt in einer Menge zugegeben wird, die 10 bis 1.000 ppm reicht.

11. Dieselkraftstoffzusammensetzung für einen Dieselmotor oder einen Verdichtungsmotor nach einem der Ansprüche 1 bis 10.

12. Verfahren zur Herstellung einer Kraftstoffzusammensetzung nach einem der Ansprüche 1 bis 11, **dadurch gekennzeichnet, dass**

a/ mindestens ein herkömmlicher Raffinerie-Dieselgrundstoff fossilen Ursprungs und/oder mindestens ein Fischer-Tropsch-Grundstoff, mindestens ein Grundstoff, der im Wesentlichen aus N-Paraffinen besteht, mindestens eine Zusammensetzung, die Fettsäureester umfasst, gemischt werden und/oder
b/ eine Zusammensetzung, die Fettsäureester und das Produkt aus der gemeinsamen Hydrobehandlung (Co-Processing) von Pflanzenölen und/oder Fettsubstanzen umfasst, und mindestens ein herkömmlicher Raffineriedieselgrundstoff fossilen Ursprungs gemischt werden, gegebenenfalls gefolgt von einem Isomerisationsschritt,

wobei es natürlich möglich ist, mehrere der Schritte a/ und b/ zu verbinden.

13. Verwendung einer Zusammensetzung, wie in einem der Ansprüche 1 bis 11 definiert, als Kraftstoff für Fahrzeuge, die mit einem Verdichtungsmotor ausgestattet sind.

14. Verwendung einer Zusammensetzung, wie in einem der Ansprüche 1 bis 11 definiert, für die Herstellung von Energie in stationären Anwendungen, wie beispielsweise Heizöl.

**Claims**

1.  Fuel composition comprising
    from 5 to 15% by mass of at least one base containing from 70 to 100% by mass of $C_{15}$-$C_{18}$ N-paraffins,
    from 5 to 30% by mass of esters of fatty acid(s),
    one or more conventional fuel bases of the diesel oil type **characterized in that**

    • the carbon of renewable origin accounts for at least 10% of the total mass of carbon, and
    • oxygen accounts for at least 0.5% and up to 5% of the total mass of the fuel composition,

    the amount of isoparaffins not exceeding more than 15% by mass of the total mass of the fuel composition.

2.  Composition according to claim 1, comprising from 10 to 15% by mass of the base containing from 70 to 100% by mass of $C_{15}$-$C_{18}$ N-paraffins.

3.  Composition according to claim 1 or 2, wherein the base containing from 70 to 100% by mass of $C_{15}$-$C_{18}$ N-paraffins is of renewable origin.

4.  Composition according to any one of claims 1 to 3, comprising from 15 to 25% by mass of esters of fatty acid(s).

5.  Composition according to any one of claims 1 to 4, wherein the esters of fatty acid(s) are derived from of vegetable oil(s) and/or animal fat(s) and/or of biomass.

6.  Composition according to any one of claims 1 to 5, wherein the conventional fuel base(s) of the diesel oil type do not account for more than 70% of the total mass of said composition, preferably said base(s) account for from 60 to 70% of the total mass of said composition.

7.  Composition according to any one of claims 1 to 6, wherein the carbon of renewable origin represents from 10 to 30% of the total mass of the carbon.

8.  Composition according to any one of claims 1 to 7, wherein the oxygen represents at least 2%, advantageously at least 3% of the total mass of the fuel composition and the oxygen represents up to 5%, preferably up to 4% of the total mass of the fuel composition.

9.  Composition according to any one of claims 1 to 8, **characterized in that** it further comprises at least isoparaffins in an amount not exceeding more than 15% by mass of the total mass of the fuel composition as defined in any one of claims 1 to 8, and advantageously accounting for 5 to 15% of the total mass of the composition as defined in any one of claims 1 to 8.

10. The composition according to any of claims 1 to 9, **characterized in that** it comprises one or more additives among which mention may be made of detergents, anti-corrosion agents, dispersants, de-emulsifiers, anti-foam agents, biocides, reodorants, procetane additives, friction modifiers, combustion aid agents (catalytic promoters of combustion and of soot), agents improving the cloud point, anti-sedimentation agents, anti-wear agents and/or agents modifying conductivity, or even one or more other additives improving the pour point, the limiting filterability temperature, and the lubricating power, each additive being preferably added in an amount ranging from 10 to 1,000 ppm.

11. A fuel composition of the diesel oil type for a diesel engine or compression engine according to any of claims 1 to 10.

12. A method for preparing a fuel composition according to one of claims 1 to 11, **characterized in that**

    a/ at least one conventional refinery base of fossil origin of the diesel oil type and/or at least one base of the Fischer-Tropsch type, at least one base essentially consisting of N-paraffins, at least one composition comprising esters of fatty acid(s), are mixed,
    and/or
    b/ a composition is mixed, comprising esters of fatty acid(s) and the product stemming from joint hydrotreatment (co-processing) of vegetable oils and/or fats and of at least one conventional refinery base of fossil origin of the diesel oil type, followed by an optional isomerization step,

it being understood that it is possible to associate several of steps a/ and b/.

13. The use of a composition as defined in any of claims 1 to 11 as fuel for vehicles equipped with a compression engine.

14. The use of a composition as defined in any of claims 1 to 11 for producing energy in fixed applications, such as domestic heating oil.

## RÉFÉRENCES CITÉES DANS LA DESCRIPTION

**Documents brevets cités dans la description**

- US 5705722 A
- WO 2004022674 A
- EP 1693432 A
- US 20070175795 A
- WO 2008 A
- WO 012415 A
- WO 2007068798 A
- US 4992605 A
- US 6270655 B
- WO 2008012415 A
- WO 2008088279 A
- WO 2008119895 A
- EP 861182 A
- EP 663000 A
- EP 736590 A
- EP 938535 A
- EP 680506 A
- EP 860494 A
- WO 9804656 A
- EP 915944 A
- FR 2772783
- FR 2772784
- EP 71513 A
- EP 100248 A
- FR 2528051
- FR 2528423
- EP 1112195 A
- EP 172758 A
- EP 271385 A
- EP 291367 A
- EP 261959 A
- EP 593331 A
- EP 674689 A
- EP 327423 A
- EP 512889 A
- EP 832172 A
- US 20050223631 A
- US 5998530 A
- WO 9314178 A
- EP 573490 A
- US 20040226216 A